# FASCICULE DE BREVET EUROPEEN

(11) **EP 2 398 364 B1**
(45) Date de publication et mention de la délivrance du brevet: **13.05.2020**
(21) Numéro de dépôt: 10709887.3
(22) Date de dépôt: 19.02.2010
(51) Int. Cl.: A47J 37/08

(54) **GRILLE-PAIN**
BROTRÖSTER
TOASTER

(30) Priorité: 23.02.2009 FR 0951142
(43) Date de publication de la demande: 28.12.2011
(73) Titulaire: Hameur S.A., 2412 Luxembourg (LU)
(72) Inventeur: LAZZER, Jean-Pierre, 71210 Montchanin (FR)
(74) Mandataire: Cornuejols, Georges
(86) Numéro de dépôt international: PCT/FR2010/050283
(87) Numéro de publication internationale: WO 2010/094895

(56) Documents cités:
- EP-A2- 1 232 710
- DE-A1- 19 652 270
- FR-A1- 2 799 632
- GB-A- 1 270 859
- US-A- 4 761 529

## Description

La présente invention se rapporte à un appareil électroménager de type grille-pain ou toaster.

Ce type d'appareil, largement répandu, comporte en général un coffret thermiquement isolant, formant le corps de l'appareil. Ce coffret contient au moins un élément chauffant, par exemple une ou des résistances reliées à une source de tension électrique. Le coffret contient également un logement mobile où l'on place un morceau de pain à griller, ledit logement étant situé à proximité des résistances. Les résistances sont mises à chauffer pendant un temps donné, à l'issue duquel le morceau de pain grillé est éjecté de l'appareil.

Il est notamment connu d'inclure les résistances dans des tubes de quartz, afin d'éviter que l'utilisateur entre en contact avec un conducteur nu.

Un degré de grillage du pain est choisi par l'utilisateur, classiquement au moyen d'un curseur ou d'une molette, avant l'introduction du pain dans l'appareil. Toutefois, ledit curseur ou ladite molette est généralement relié à un moyen de détermination d'une durée de grillage. Cette durée, souvent approximative, ne correspond pas à une qualité précise de grillage du pain. En effet, pour une même durée de grillage, le résultat obtenu en termes visuel et gustatif varie en fonction de la nature du pain introduit. Des facteurs de variation sont notamment l'épaisseur de la tranche de pain et son degré d'humidité.

Il est donc utile de pouvoir contrôler visuellement l'évolution de grillage du pain au fur et à mesure de son avancement, afin d'interrompre le grillage lorsque ce dernier a atteint le niveau souhaité par l'utilisateur. Une solution à ce problème est apportée par l'invention décrite dans le brevet FR 2 799 632, au nom de la Demanderesse. Cette invention concerne un grille-pain dont les parois latérales du coffret sont transparentes. Ainsi, les tranches de pain introduites dans l'appareil sont visibles durant leur grillage, qui peut donc être interrompu au moment souhaité.

Selon une variante de l'invention décrite dans le brevet FR 2 799 632, les éléments chauffants sont disposés dans les parties supérieure et inférieure du coffret, afin de laisser libre la partie médiane dudit coffret. De cette manière, les éléments chauffants sont peu visibles par l'utilisateur. Ce dernier peut donc contrôler le degré de grillage d'un morceau de pain sans que son champ de vision ne soit gêné par la présence d'un élément chauffant.

Un inconvénient de positionner les éléments chauffants hors de la partie médiane du coffret est lié à la qualité de grillage du pain. En effet, une tranche de pain introduite dans un tel appareil est plus grillée à proximité des éléments chauffants, soit en haut et en bas, que dans sa partie médiane. On obtient donc un grillage peu homogène, non satisfaisant pour le consommateur.

Une solution connue, décrite dans le brevet FR 2 799 632 consiste à inclure les éléments chauffants dans des logements réflecteurs. Ces logements réflecteurs ont une forme généralement recourbée, apte à réfléchir une partie du rayonnement infrarouge des résistances vers les tranches de pain, notamment vers leur partie médiane. Ces réflecteurs permettent donc d'homogénéiser le grillage du pain dans le cas où les éléments chauffants sont placés en haut et en bas du coffret.

Cependant, il arrive que le résultat atteint ne soit pas suffisamment homogène au goût du consommateur. Il existe donc un besoin de réguler le degré de grillage en fonction de la zone de la tranche de pain.

Un autre inconvénient lié à la position des éléments chauffants concerne la chute de miettes de pain dans le fond de l'appareil. En effet, au cours de l'introduction ou de l'éjection du pain, des miettes peuvent tomber sur les éléments chauffants et, le cas échéant, sur les réflecteurs. Les éléments chauffants concernés sont principalement ceux se trouvant dans une partie inférieure du coffret.

En raison de leur forme, notamment incurvée, les réflecteurs qui reçoivent des miettes de pain conservent ces miettes à proximité, voire au contact des éléments chauffants. Au cours du grillage, ces miettes sont portées à très haute température. Elles se calcinent et dégagent de la fumée, ce qui provoque une gêne pour le consommateur et un risque de début d'incendie.

De plus, cette calcination laisse des traces inesthétiques sur les éléments chauffants et sur les réflecteurs. Dans le cas où le coffret est transparent, l'intérieur de l'appareil est visible par l'utilisateur. Il est donc préférable d'éviter l'apparition de telles traces de calcination sur les réflecteurs. Un autre grille-pain est connu de EP 1 232 710 A2.

La présente invention permet de résoudre ces divers problèmes. L'invention se rapporte à un grille-pain tel que revendiqué dans la revendication 1.

Selon l'invention, au moins un élément chauffant par rayonnement comporte un logement réflecteur, ledit logement réflecteur permettant de réfléchir une partie du rayonnement vers le pain à griller, et une partie d'une surface dudit réflecteur est équipée de moyens d'empêcher le réfléchissement du rayonnement vers le pain. Selon cette forme de l'invention, la diffusion du rayonnement vers le pain par réflexion est partiellement empêchée.

Les moyens d'empêcher le réfléchissement du rayonnement peuvent être constitués d'un matériau non réfléchissant, appliqué sur une partie de la surface du réflecteur. Ce matériau peut notamment être de type vernis ou peinture. Ces moyens peuvent également consister en un autre traitement de la surface du réflecteur, tel qu'un dépolissage ou une déformation locale.

Selon un mode de réalisation ne faisant pas partie de l'invention, les moyens d'empêcher le réfléchissement du rayonnement sont des trous traversants, ménagés dans la surface du réflecteur.

Selon une autre forme de l'invention, au moins un élément chauffant par rayonnement comporte une paroi disposée entre l'élément chauffant et le logement mobile. Ladite paroi absorbe une partie du rayonnement diffusé en direction du pain. Ainsi, la diffusion du rayonnement direct vers le pain est partiellement empêchée.

Selon un mode de réalisation préférentiel de l'invention, la paroi comporte une surface présentant au moins un gradient d'absorbance du rayonnement infrarouge. Ainsi, selon la zone de la paroi considérée, l'absorbance est différente. L'intensité du rayonnement infrarouge diffusé vers le pain est donc modulée selon la zone du morceau à griller.

Un tel gradient d'absorbance peut être réalisé par une épaisseur variable de la paroi. La paroi peut également être composée de plusieurs matériaux ayant des absorbances différentes.

Selon un mode préférentiel de réalisation de l'invention, la paroi est réalisée dans un matériau transparent ou translucide à la lumière visible. On peut notamment utiliser une paroi de mica. Selon un autre mode de réalisation, la paroi est réalisée dans un matériau opaque à la lumière visible, comme par exemple du PTFE (polytétrafluoroéthylène).

Selon un mode de réalisation de l'invention, la paroi présente une ou des surfaces continues. Afin de ne pas allonger de manière trop importante les durées nécessaires au grillage du pain, il est préférable d'utiliser une paroi constituée d'un matériau laissant passer une partie suffisante du rayonnement infrarouge.

Selon un autre mode de réalisation de l'invention, ladite paroi comporte une ou plusieurs perforations, afin de moduler l'intensité du rayonnement infrarouge reçu par telle ou telle partie du morceau de pain à griller.

Selon un mode de réalisation préférentiel de l'invention, ladite paroi est une grille. Une telle grille est formée par exemple de fils métalliques. La disposition desdits fils permet de moduler l'intensité du rayonnement infrarouge reçu par telle ou telle partie du morceau de pain à griller.

Outre sa fonction de régulation du rayonnement infrarouge diffusé vers le pain, une telle paroi permet d'éviter que des miettes de pain ne se retrouvent au contact de l'élément chauffant. En cas de présence d'un réflecteur équipant l'élément chauffant, cette paroi peut également éviter que des miettes de pain ne s'accumulent sur le réflecteur, à proximité ou au contact de l'élément chauffant. Cette fonction de protection contre les miettes concerne particulièrement les éléments chauffants se trouvant dans une partie inférieure du grille-pain.

Il est connu d'équiper de telles parois les éléments chauffants de fours-grilloirs. Cependant, ces parois ont alors une fonction de protection mécanique contre les chocs, lors de l'introduction d'objets durs, tels que des plats, à l'intérieur du four. Ces parois ont également pour fonction de protéger l'utilisateur d'un éventuel contact électrique en cas de rupture de l'élément chauffant.

Cette fonction n'a pas lieu d'être dans un grille-pain. En effet, ce dernier n'est pas destiné à l'introduction d'objets durs, ni de la main d'un utilisateur.

L'invention présente un intérêt particulier pour les grille-pains dont les éléments chauffants sont positionnés en haut et en bas de l'appareil, notamment lorsque les parois dudit grille-pain sont transparentes.

Cependant, l'invention est susceptible de s'appliquer à tout type de grille-pain, quelle que soit la position des éléments chauffants. D'une manière générale, l'invention permet de réguler le rayonnement des éléments chauffants vers une certaine partie du pain à griller. Une telle invention permet notamment d'adopter une disposition asymétrique des éléments chauffants, par exemple en les regroupant dans une partie supérieure de l'appareil, tout en assurant un grillage homogène d'une tranche de pain.

L'invention sera mieux comprise à la lecture de la description qui suit et à l'examen des figures qui l'accompagnent. Celles-ci sont présentées à titre indicatif et nullement limitatif de l'invention.
- Figure 1 : vue en coupe d'un grille-pain selon un mode de réalisation de l'invention ;
- Figure 2 : perspective cavalière d'un élément chauffant et d'un réflecteur selon un mode de réalisation de l'invention ;
- Figure 3 : perspective cavalière d'un élément chauffant et d'un réflecteur selon un autre mode de réalisation de l'invention.

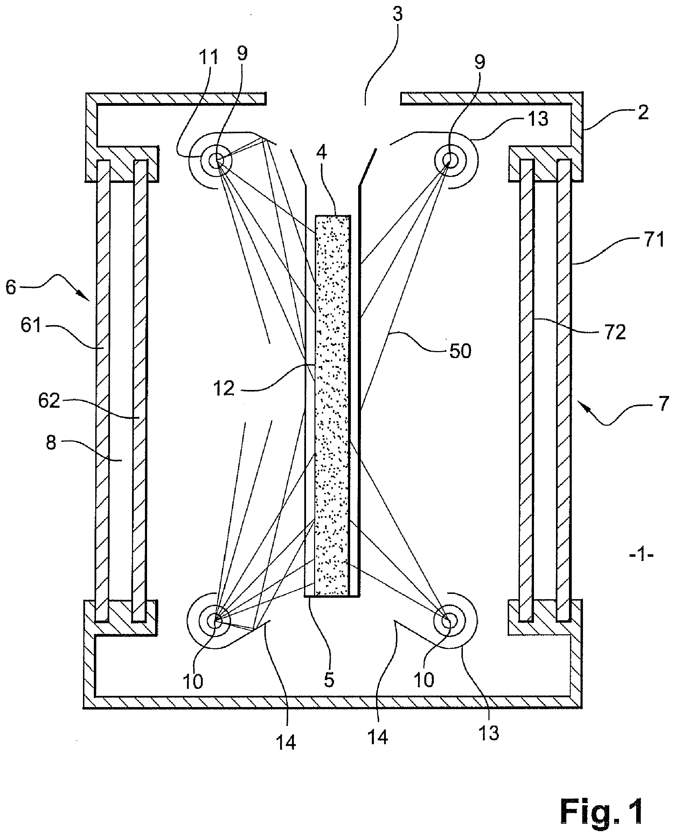

La figure 1 représente une vue en coupe d'un grille-pain selon un mode de réalisation de l'invention.

Le grille-pain 1 comporte un coffret 2, de forme sensiblement parallélépipédique. Ledit coffret présente, à sa partie supérieure, une fente 3 par laquelle peuvent être introduites une ou plusieurs tranches 4 de pain. Une tranche 4 de pain introduite dans le grille-pain 1 est supportée par un logement 5, mobile en translation verticale. Un tel logement 5 mobile est employé de manière classique dans la plupart des grille-pains connus. Sur la figure 1, le logement 5 est représenté en position basse. Le logement 5 se trouve notamment dans cette position basse lorsque les éléments chauffants (9,10) du grille-pain 1 fonctionnent. Lors de l'éjection du pain, le logement 5 adopte une position plus haute.

Le logement 5 mobile est par exemple constitué de fils métalliques espacés les uns des autres, afin de ne pas faire obstacle au grillage du pain. De manière préférentielle, le logement 5 mobile comporte des fils verticaux disposés côte à côte. De manière plus préférentielle, deux fils voisins sont espacés de 19 mm au maximum.

Le logement 5 se trouve en position médiane du coffret, par rapport aux parois latérales (6, 7). Dans l'exemple présenté à la figure 1, les parois (6,7) sont transparentes. Plus précisément, les parois (6,7) sont transparentes à la lumière visible. Chacune de ces parois est constituée de deux plaques (61, 62 ; 71, 72) transparentes, par exemple des plaques de verre. Un espace 8, ménagé entre les deux plaques formant une paroi, forme une isolation thermique entre l'intérieur et l'extérieur du coffret 2. De manière préférentielle, deux plaques (61, 62) transparentes formant une paroi sont espacées d'au moins 2 mm.

Selon le mode de réalisation représenté à la figure 1, les parois (6, 7) sont montées fixes sur le coffret 2. Selon un autre mode de réalisation de l'invention, au moins une paroi 6 ou 7 est mobile en rotation par rapport au coffret 2, par exemple selon un axe perpendiculaire au plan de coupe de la figure 1. Ladite paroi mobile forme alors une porte qui permet d'accéder facilement à l'intérieur du coffret, par exemple pour des opérations de nettoyage.

Selon un autre mode de réalisation de l'invention au moins une paroi 6 ou 7 est montée de manière amovible par rapport au coffret 2. Plus particulièrement, au moins une paroi 6 ou 7 est fixée au coffret 2 par des moyens d'assemblage réversible, par exemple des clips.

Préférentiellement, dans le cas où une paroi (6, 7) est mobile en rotation ou amovible par rapport au coffret 2, le grille-pain 1 est équipé d'un système de sécurité. Ce système coupe l'alimentation électrique du grille-pain lorsque l'une au moins des parois (6, 7) n'est pas en position fermée.

De chaque côté du logement 5 mobile sont disposés des éléments 20 chauffants, comportant par exemple des résistances (9,10) chauffantes. Plus précisément, chaque côté du logement 5 mobile comporte deux résistances (9,10) chauffantes. Avantageusement, les résistances (9,10) sont incluses dans des tubes 11 de quartz, qui améliorent l'émission infrarouge.

Afin de ne pas entrer dans le champ de vision d'un utilisateur, des résistances 9 sont situées dans la partie supérieure du coffret 2, tandis que des résistances 10 sont situées dans la partie inférieure du coffret 2. Ainsi, un observateur situé à la hauteur des parois (6,7) transparentes a une vision dégagée des tranches 4 de pain. Il peut ainsi évaluer de manière optimale le degré de grillage desdites tranches 4.

Le positionnement des résistances (9,10) en haut et en bas du coffret tend à générer un degré de grillage plus important en parties supérieure et inférieure de la tranche 4 de pain qu'en partie 12 médiane de ladite tranche. Afin d'uniformiser la quantité d'infrarouges reçue sur toute la surface du pain, il est prévu autour de chaque tube 11 de quartz un réflecteur 13, qui oriente le rayonnement 50 infrarouge en direction du pain, notamment de la partie 12 médiane de la tranche 4.

Cependant, une partie du réflecteur 13, notamment à proximité d'un bord 14 le plus proche du logement 5 mobile, réfléchit également le rayonnement infrarouge en direction de la partie supérieure ou inférieure de la tranche 4.

Afin d'uniformiser la quantité de rayonnement infrarouge reçue sur l'ensemble de la surface de la tranche 4, il est donc avantageux d'empêcher la diffusion vers le pain 4 d'une partie du rayonnement 50 émis par les résistances (9,10). Par exemple, il est avantageux d'équiper une partie d'une surface du réflecteur 13 de moyens d'empêcher le réfléchissement du rayonnement 50 vers le pain. Dans l'exemple présenté à la figure 1, il est avantageux que lesdits moyens se trouvent à proximité du bord 14 le plus proche du logement 5 mobile, afin de diminuer la quantité d'infrarouges réfléchie vers les parties supérieure et inférieure de la tranche 4.

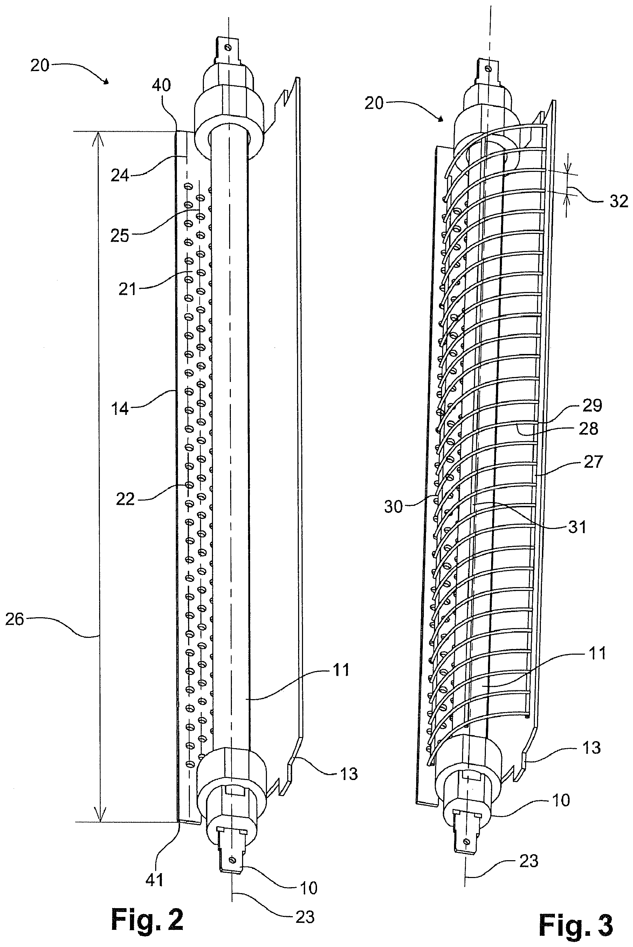

Une solution à ce problème est résolue par l'invention, dont une forme de réalisation est représentée à la figure 2. Plus précisément, la figure 2 représente une perspective cavalière d'un élément 20 chauffant, équipant un grille-pain selon une forme de l'invention.

Selon l'exemple représenté à la figure 2, l'élément 20 chauffant comporte une résistance 10 chauffante, insérée dans un tube 11 de quartz. Selon un autre mode de réalisation de l'invention, un élément 20 chauffant peut être une résistance disposée autour d'un cylindre en céramique, ou encore une résistance tubulaire blindée.

Le tube 11 est entouré par un réflecteur 13, sur un secteur de 200° environ. Lorsque l'élément 20 est installé dans un grille-pain 1, une partie 21 du réflecteur 13 réfléchit les rayons infrarouges en direction du logement 5 mobile. Cette partie 21, sensiblement plane, est située à proximité d'un bord 14 du réflecteur 13.

Selon un exemple ne faisant pas partie de l'invention, la partie 21 du réflecteur 13 est équipée de trous 22 traversant, qui empêchent le réfléchissement d'une partie du rayonnement infrarouge de la résistance 10 vers le logement 5.

Dans l'exemple représenté à la figure 2, les trous 22 sont disposés de manière sensiblement régulière selon un axe 23 principal de l'élément 20 chauffant. Il est également possible de disposer ces trous de manière irrégulière. On peut par exemple espacer davantage les trous à proximité d'un centre du bord 14, qu'à proximité des extrémités (40, 41) dudit bord 14. On peut encore réaliser des trous plus gros à proximité des extrémités (40, 41) qu'à proximité dudit centre. Cela permet un réfléchissement plus important du rayonnement 50 vers un centre de la tranche 4 que vers des bords latéraux de ladite tranche. Le grillage d'une partie centrale de la tranche 4 est favorisé par rapport au grillage des bords, qui sont en général plus secs à l'origine.

Dans l'exemple représenté à la figure 2, les trous 22 sont disposés de manière sensiblement régulière sur des axes (24,25) sensiblement parallèles à l'axe 23 principal de l'élément 20 chauffant. Préférentiellement, les trous 22 sont disposés sur au moins deux axes (24,25). Il est possible de moduler la quantité de rayonnement réfléchi en formant des trous de taille différente sur l'axe 24 et sur l'axe 25.

De manière avantageuse, afin d'homogénéiser le réfléchissement des infrarouges, les trous situés sur un axe 24 sont en quinconce par rapport aux trous situés sur un axe 25 contigu.

Selon un mode de réalisation ne faisant pas partie de l'invention, les trous 22 situés sur un même axe 24 ou 25 sont de taille et de forme similaires, de manière à favoriser un rayonnement homogène sur la longueur 26 du réflecteur 13.

Comme évoqué précédemment, il est également possible de réaliser des trous de taille et/ou de forme variables le long de l'axe 23, afin de générer un rayonnement variable sur la longueur 26 du réflecteur 13.

Selon une variante ne faisant pas partie de l'invention, il est possible de remplacer les trous 22 par des touches d'un matériau non réfléchissant, comme de la peinture ou du vernis. Il est également possible de remplacer les trous 22 par des zones de surface traitées de manière particulière, par exemple des zones dépolies.

Outre l'effet de régulation du rayonnement, la présence de trous 22 ou de touches de peinture sur les réflecteurs a également un effet esthétique. En présentant un aspect de « mosaïque » à l'œil de l'utilisateur, elle détourne son attention d'éventuelles traces de calcination. Ces traces seraient beaucoup plus visibles sur un réflecteur présentant une surface unie. Cet effet est notamment appréciable dans le cas d'un grille-pain comportant des parois (6,7) transparentes.

Pour des éléments 20 destinés à être installés dans la partie inférieure d'un coffret 2 de grille-pain, la présence de trous 22 permet en outre de laisser passer des miettes de pain ayant chu dans le réflecteur 13. Cela évite à ces miettes d'être calcinées au contact des tubes 11 de quartz. Toutefois, seules les miettes dont les dimensions sont inférieures à celles des trous 22 sont susceptibles de passer par lesdits trous 22.

La figure 3 représente une perspective cavalière d'un élément 20 chauffant selon une autre forme de l'invention. Cet élément 20 est similaire à celui représenté sur la figure 2.

Dans l'exemple représenté à la figure 3, l'élément 20 chauffant est équipé d'une grille 27, disposée entre le tube 11 et le logement 5 mobile. Cette grille 27 est essentiellement constituée de fils 28 se développant dans des plans perpendiculaires à l'axe 23 principal de l'élément 20. Chacune des extrémités (29, 30) de chaque fil 28 est en contact avec une partie du réflecteur 13, ou proche dudit réflecteur 13.

Les fils 28 sont fixés solidairement à au moins un fil 31, sensiblement parallèle à l'axe 23, qui assure la cohésion de la grille 27.

Les fils 28 sont recourbés et entourent le tube 11 sur un secteur de 160° environ. Ainsi, dans un plan perpendiculaire à l'axe 23, le tube 11 de l'élément 20 est entièrement entouré par l'ensemble grille 27 / réflecteur 13.

La section, le nombre et la disposition des fils 28 permettent de moduler l'intensité du rayonnement infrarouge diffusé vers le pain par la résistance 10, dans une direction parallèle à l'axe 23. De même, la section, le nombre et la disposition des fils 31 permettent de moduler l'intensité du rayonnement diffusé vers le pain, dans une direction perpendiculaire à l'axe 23.

Les fils (28, 31) peuvent également présenter une section variable sur leur longueur.

De manière préférentielle, les fils (28, 31) sont en métal. Ils peuvent également être réalisés dans un autre matériau, ayant par exemple une absorbance plus élevée du rayonnement infrarouge.

Outre son effet de régulation du rayonnement, la grille 27 permet d'éviter la chute de grosses miettes de pain sur le tube 11 et dans le réflecteur 13, ainsi que la carbonisation de ces miettes au contact du tube 11. Plus précisément, les miettes de pain dont au moins une dimension est supérieure à un espace 32 entre deux fils 28 peuvent glisser sur lesdits fils et tomber au fond du coffret 2.

Les miettes dont les dimensions sont inférieures à l'espace 32 entre deux fils 28 passent entre lesdits fils et tombent sur le tube 11 ou dans le réflecteur 13. Une partie de ces miettes peut alors passer par les trous 22 et tomber au fond du coffret 2.

Il existe cependant des miettes d'une taille intermédiaire, assez petite pour traverser la grille 27 mais trop élevée pour passer à travers les trous 22.

Afin de remédier à ce problème, il est possible de remplacer la grille 27 par une paroi, notamment non perforée, constituée d'un matériau laissant passer au moins une partie du rayonnement infrarouge émis par la résistance de l'élément 20. On peut notamment utiliser une paroi de mica ou encore de PTFE. Une telle paroi peut avoir une forme recourbée, similaire à la forme de la grille 27.

## Revendications

1. Grille-pain (1) comportant :
- un coffret (2) thermiquement isolant, chacune (6, 7) des parois latérales dudit coffret étant constituée de deux plaques (61, 62, 71, 72) transparentes, un espace (8) étant ménagé entre deux plaques formant une paroi,
au moins l'une des parois (6,7) étant mobile en rotation ou amovible par rapport au coffret ;
- un logement (5) mobile destiné à recevoir un morceau (4) de pain ;
- au moins un élément (20) chauffant par rayonnement (50) infrarouge, ledit élément chauffant étant équipé d'au moins un moyen (22, 27) d'empêcher la diffusion d'une partie du rayonnement vers le pain ;
ledit grille-pain étant **caractérisé en ce que** les éléments chauffants sont alimentés en énergie seulement si les deux parois (6, 7) latérales sont en position fermée,
au moins un élément (20) chauffant par rayonnement infrarouge comporte un logement (13) réflecteur, ledit logement réflecteur permettant de réfléchir une partie du rayonnement vers le pain à griller, une partie (21) d'une surface dudit réflecteur (13) étant équipée de moyens (22) d'empêcher le réfléchissement du rayonnement vers le pain,
et lesdits moyens d'empêcher le réfléchissement du rayonnement sont constitués d'un matériau non réfléchissant, appliqué sur une partie (21) de la surface du réflecteur.

2. Grille-pain selon la revendication 1, **caractérisé en ce qu'**au moins un élément chauffant est équipé d'une paroi (27) disposée entre l'élément chauffant et le logement mobile.

3. Grille-pain selon la revendication 2, **caractérisé en ce que** la paroi de l'élément chauffant comporte une surface présentant au moins un gradient d'absorbance du rayonnement infrarouge.

4. Grille-pain selon la revendication 2 ou la revendication 3, **caractérisé en ce que** la paroi de l'élément chauffant est réalisée dans un matériau transparent ou translucide à la lumière visible.

5. Grille-pain selon l'une des revendications 2 à 4, **caractérisé en ce que** la paroi de l'élément chauffant comporte une ou plusieurs perforations.

6. Grille-pain selon l'une des revendications 2 à 5, **caractérisé en ce que** la paroi de l'élément chauffant est une grille (27).

7. Grille-pain selon l'une des revendications précédentes, **caractérisé en ce qu'**un élément (20) chauffant comporte une résistance (10) incluse dans un tube (11) de quartz.

8. Grille-pain selon l'une des revendications précédentes, **caractérisé en ce que** deux plaques (61, 62) transparentes formant une paroi latérale du coffret sont espacées d'au moins 2 mm.

9. Grille-pain selon l'une des revendications précédentes, **caractérisé en ce qu'**au moins une paroi (6, 7) latérale est mobile en rotation autour d'un axe, par rapport au coffret (2).

10. Grille-pain selon l'une des revendications précédentes, **caractérisé en ce qu'**au moins un élément chauffant (20) est une résistance disposée autour d'un cylindre en céramique.

11. Grille-pain selon l'une des revendications précédentes, **caractérisé en ce qu'**au moins un élément chauffant (20) est une résistance tubulaire blindée.

12. Grille-pain selon l'une des revendications précédentes, **caractérisé en ce que** le logement (5) mobile comporte des fils verticaux disposés côte à côte, deux fils voisins étant espacés de 19 mm au maximum.

## Patentansprüche

1. Toaster (1), umfassend:
- ein thermisch isolierendes Gehäuse (2), wobei jede (6, 7) Seitenwand des genannten Gehäuses aus zwei durchsichtigen Platten (61, 62, 71, 72) gebildet ist, wobei ein Raum (8) zwischen zwei eine Wand formenden Platten ausgespart ist,
wobei wenigstens eine der Wände (6, 7) in Drehung beweglich oder im Verhältnis zum Gehäuse abnehmbar ist;
- eine mobile Aufnahme (5), die zum Empfangen eines Stücks (4) Brot bestimmt ist;
- wenigstens ein per Infrarot-Strahlung (50) heizendes Element (20), wobei das genannte heizende Element mit wenigstens einem Mittel (22, 27) ausgerüstet ist, das die Verteilung eines Teils der Strahlung zum Brot verhindert;
wobei der genannte Toaster **dadurch gekennzeichnet ist, dass** die heizenden Elemente nur dann mit Energie versorgt sind, wenn die zwei Wände (6, 7) in geschlossener Position sind,
wenigstens ein per Infrarot-Strahlung heizendes Element (20) eine reflektierende Aufnahme (13) umfasst, wobei die genannte Aufnahme das Reflektieren eines Teils der Strahlung zum zu toastenden Brot erlaubt, wobei ein Teil (21) einer Fläche des genannten Reflektors (13) mit Mitteln (22) ausgerüstet ist, die das Reflektieren der Strahlung zum Brot verhindern,
und die genannten Mittel, die das Reflektieren der Strahlung verhindern, aus einem nicht reflektierenden Material gebildet sind, das auf einem Teil (21) der Fläche des Reflektors angewendet ist.

2. Toaster gemäß Anspruch 1, **dadurch gekennzeichnet, dass** wenigstens ein heizendes Element mit einer Wand (27) ausgerüstet ist, die zwischen dem heizenden Element und der mobilen Aufnahme angeordnet ist.

3. Toaster gemäß Anspruch 2, **dadurch gekennzeichnet, dass** die Wand des heizenden Elements eine Fläche umfasst, die wenigstens einen Absorbanzgradienten der Infrarot-Strahlung aufweist.

4. Toaster gemäß Anspruch 2 oder Anspruch 3, **dadurch gekennzeichnet, dass** die Wand des heizenden Elements aus einem für sichtbares Licht durchsichtigen oder durchscheinenden Material realisiert ist.

5. Toaster gemäß einem der Ansprüche 2 bis 4, **dadurch gekennzeichnet, dass** die Wand des heizenden Elements eine oder mehrere Durchbohrung(en) umfasst.

6. Toaster gemäß einem der Ansprüche 2 bis 5, **dadurch gekennzeichnet, dass** die Wand des heizenden Elements ein Gitter (27) ist.

7. Toaster gemäß einem der voranstehenden Ansprüche, **dadurch gekennzeichnet, dass** ein heizendes Element (20) einen Widerstand (10) umfasst, der in einer Quarzröhre (11) enthalten ist.

8. Toaster gemäß einem der voranstehenden Ansprüche, **dadurch gekennzeichnet, dass** zwei durchsichtige Platten (61, 62), die eine Seitenwand des Gehäuses bilden, um wenigstens 2 mm beabstandet sind.

9. Toaster gemäß einem der voranstehenden Ansprüche, **dadurch gekennzeichnet, dass** wenigstens eine Seitenwand (6, 7) in Drehung um eine Achse im Verhältnis zum Gehäuse (2) mobil ist.

10. Toaster gemäß einem der voranstehenden Ansprüche, **dadurch gekennzeichnet, dass** wenigstens ein heizendes Element (20) ein Widerstand (10) ist, der um einen Keramikzylinder angeordnet ist.

11. Toaster gemäß einem der voranstehenden Ansprüche, **dadurch gekennzeichnet, dass** wenigstens ein heizendes Element (20) ein röhrenförmiger, abgeschirmter Widerstand ist.

12. Toaster gemäß einem der voranstehenden Ansprüche, **dadurch gekennzeichnet, dass** die mobile Aufnahme (5) vertikale Drähte umfasst, die Seite an Seite angeordnet sind, wobei zwei benachbarte Drähte um maximal 19 mm beabstandet sind.

## Claims

1. Toaster (1) comprising:
- a thermally insulating housing (2), each of the side walls (6, 7) of said housing comprising two transparent plates (61, 62, 71, 72), a space (8) being provided between the two plates that form a wall,
at least one of the walls (6, 7) being removable or rotationally mobile relative to the housing;
- a movable compartment (5) intended to receive a piece of bread (4);
- at least one element (20) heating by means of infrared radiation (50), said heating element being fitted with at least one means (22, 27) for preventing a portion of the radiation from being emitted towards the bread;
said toaster being **characterized in that** the heating elements are only supplied with power if the two side walls (6, 7) are in the closed position,
at least one element (20) heating by means of infrared radiation comprises a reflector housing (13), said reflector housing allowing a portion of the radiation to be reflected towards the bread to be toasted, one portion (21) of one surface of said reflector (13) being fitted with means (22) for preventing the radiation from being reflected towards the bread,
and said means for preventing the radiation from being reflected are made from a non-reflective material, applied on a portion (21) of the surface of the reflector.

2. Toaster according to claim 1, **characterized in that** at least one heating element is fitted with a wall (27) positioned between the heating element and the movable compartment.

3. Toaster according to claim 2, **characterized in that** the wall of the heating element comprises a surface having at least one infrared radiation absorption gradient.

4. Toaster according to claim 2 or claim 3, **characterized in that** the wall of the heating element is made from a material that is transparent or translucent to visible light.

5. Toaster according to one of claims 2 to 4, **characterized in that** the wall of the heating element comprises one or more perforations.

6. Toaster according to one of claims 2 to 5, **characterized in that** the wall of the heating element is a grating (27).

7. Toaster according to one of the preceding claims, **characterized in that** a heating element (20) comprises a resistor (10) contained in a quartz tube (11).

8. Toaster according to one of the preceding claims, **characterized in that** the two transparent plates (61, 62) forming a side wall of the housing are spaced at least 2 mm apart.

9. Toaster according to one of the preceding claims, **characterized in that** at least one side wall (6, 7) is rotationally mobile around an axis relative to the housing (2).

10. Toaster according to one of the preceding claims, **characterized in that** at least one heating element (20) is a resistor arranged around a ceramic cylinder.

11. Toaster according to one of the preceding claims, **characterized in that** at least one heating element (20) is a shielded tubular resistor.

12. Toaster according to one of the preceding claims, **characterized in that** the movable compartment (5) comprises vertical wires positioned side by side, two neighboring wires being spaced a maximum of 19 mm apart.
